(19) Europäisches Patentamt
European Patent Office
Office européen des brevets

(11) **EP 4 279 946 A1**

(12) **EUROPÄISCHE PATENTANMELDUNG**

(43) Veröffentlichungstag:
**22.11.2023 Patentblatt 2023/47**

(21) Anmeldenummer: **22174508.6**

(22) Anmeldetag: **20.05.2022**

(51) Internationale Patentklassifikation (IPC):
**G01S 7/41** (2006.01)      **G01S 7/497** (2006.01)
**G06N 3/08** (2023.01)      **G01S 7/52** (2006.01)

(52) Gemeinsame Patentklassifikation (CPC):
**G01S 7/417; G01S 7/497; G01S 17/08;** G01D 3/08;
G01D 5/34746; G06N 3/08

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Leuze electronic GmbH + Co. KG**
**73277 Owen/Teck (DE)**

(72) Erfinder:
• **Stephan, Phillip**
  **72793 Pfullingen (DE)**

• **Dörner, Sebastian**
  **97980 Bad Mergentheim (DE)**
• **ten Brink, Stephan**
  **70469 Stuttgart-Feuerbach (DE)**
• **Struckmeier, Anselm**
  **73277 Owen/Teck (DE)**
• **Köbel, Herbert**
  **73277 Owen/Teck (DE)**
• **Sanzi, Friedrich**
  **73230 Kirchheim/Teck (DE)**

(74) Vertreter: **Ruckh, Rainer Gerhard**
**Patentanwalt**
**Jurastrasse 1**
**73087 Bad Boll (DE)**

(54) **SENSOR UND VERFAHREN ZUR DETEKTION VON OBJEKTEN MITTELS EINES SENSORS**

(57)      Die Erfindung betrifft eine Sensoranordnung mit einem Sensor, der Sensorkomponenten aufweist, welche Messdaten in Form von Abstandsdaten oder Positionsdaten generieren. Es ist eine Auswerteeinheit (5) mit wenigstens einem neuronalen Netz (14) vorgesehen, mittels dessen Messwertfehler von aus den Messdaten abgeleiteten Ausgangssignal reduziert werden.

Fig. 1

EP 4 279 946 A1

**Beschreibung**

Die Erfindung betrifft einen Sensor und ein Verfahren zur Detektion von Objekten mittels eines Sensors.

Derartige Sensoren können insbesondere als optische Sensoren ausgebildet sein.

Die optischen Sensoren dienen allgemein zur Detektion von Objekten. Hierzu weist der optische Sensor eine Sende-/Empfangseinheit mit wenigstens einem Sendelichtstrahlen emittierenden Sender und einem Empfangslichtstrahlen empfangenden Empfänger auf. Zur Objektdetektion werden typischerweise die zum Senden emittierten Sendelichtstrahlen zum Objekt geführt, von diesem reflektiert und dann als Empfangslichtstrahlen weiter zum Empfänger geführt. Die dadurch am Ausgang des Empfängers anstehenden Empfangssignale werden in einer Auswerteeinheit des optischen Sensors ausgewertet, wodurch eine zeitliche Folge von Messwerten generiert wird.

Der optische Sensor kann beispielsweise als Distanzsensor ausgebildet sein. Dann sind die Messwerte Distanzwerte, die die Distanz des Objekts zum optischen Sensor angeben.

Die Messwerte sind prinzipbedingt fehlerbehaftet. Beispielsweise durch Messwertrauschen sind die Messwerte Schwankungen unterworfen. Zur Reduzierung derartiger Messwertfehler ist es bekannt, eine Mitteilung über mehrere Messwerte durchzuführen. Durch Rauschen oder sonstige Effekte bedingte Schwankungen der Messwerte können dadurch reduziert werden, so dass die Messfehler bei der Objektdetektion reduziert werden.

Derartige Mittelungsverfahren führen dann zu einer effizienten Reduzierung der Messfehler und damit zu einer erhöhten Messgenauigkeit, wenn sich die Position des Objekts zum optischen Sensor während der Objektdetektion nicht ändert.

Probleme treten jedoch dann auf, wenn sich das Objekt relativ zum optischen Sensor bewegt, so dass sich dessen Position oder dessen Distanz zum optischen Sensor während der Mittelwertbildung der Messwerte ändert. Ist der optische Sensor beispielsweise als Distanzsensor ausgebildet, der Messwerte in Form von Distanzwerten generiert, so führt eine Mittelung der Messwerte dann zu einer Verfälschung der Messergebnisse, wenn sich während der Mittelung der Messwerte die Distanz des Objekts zum optischen Sensor ändert. Insbesondere treten dann sogenannte Schleppfehler bei der Mittelwertbildung auf.

Zudem wird die Reaktionszeit des optischen Sensors bei der Generierung von Ausgangssignalen durch die Mittelwertbildung in unerwünschter Weise erhöht.

Der Erfindung liegt die Aufgabe zugrunde, einen Sensor der eingangs genannten Art bereitzustellen, bei welchem insbesondere auch für relativ zum Sensor bewegte Objekte eine genaue und präzise Objektdetektion gewährleistet ist.

Zur Lösung dieser Aufgabe sind die Merkmale der unabhängigen Ansprüche vorgesehen. Vorteilhafte Ausführungsformen und zweckmäßige Weiterbildungen sind in den abhängigen Ansprüchen beschrieben.

Die Erfindung betrifft eine Sensoranordnung mit einem Sensor, der Sensorkomponenten aufweist, welche Messdaten in Form von Abstandsdaten oder Positionsdaten generieren. Es ist eine Auswerteeinheit mit wenigstens einem neuronalen Netz vorgesehen, mittels dessen Messwertfehler von aus den Messdaten abgeleiteten Ausgangssignal reduziert wird.

Die Erfindung betrifft weiterhin ein entsprechendes Verfahren.

Der Sensor der erfindungsgemäßen Sensoranordnung kann prinzipiell als Radarsensor oder dergleichen ausgebildet sein. Besonders vorteilhaft ist der Sensor ein optischer Sensor.

Dabei kann der Sensor als Distanzsensor ausgebildet sein.

Weiterhin kann die erfindungsgemäße Sensoranordnung einen Sensor in Form eines optischen Sensors mit einem zugeordneten Positionsmaßsystem aufweisen. Die so ausgebildete Sensoranordnung umfasst eine stationäre äquidistante Anordnung von Marken, insbesondere Barcodes, in denen deren Absolutposition innerhalb des Positionsmaßsystems codiert ist. Der als optischer Sensor ausgebildete Sensor ist dann als Codeleser ausgebildet, mit dem die Marken gelesen und in ihrer Position erfasst werden. Der Sensor ist beweglich relativ zum Positionsmaßsystem angeordnet, insbesondere auf einem Fahrzeug. Durch Lesen der Marken des Positionsmaßsystems kann dann das Fahrzeug relativ zum Positionsmaßsystems positioniert werden. Eine alternative Anordnung, in der der Sensor stationär angeordnet ist und das Positionsmaßsystem bewegt wird, ist auch denkbar.

Bei dem Sensor der erfindungsgemäßen Sensoranordnung erfolgt die Verarbeitung der mit den Sensorkomponenten generierten Messdaten mit einem neuronalen Netz als Bestandteil einer Auswerteeinheit des Sensors.

Mit dem neuronalen Netz erfolgt eine Verarbeitung der Messdaten des Sensors derart, dass Messfehler von aus den Messdaten abgeleiteten Ausgangssignalen reduziert werden. Insbesondere erfolgt eine Reduzierung, insbesondere Filterung des Messwertrauschens, wodurch eine erhöhte Messgenauigkeit des Sensors erhalten wird.

Ein wesentlicher Vorteil der Erfindung besteht darin, dass mit dem neuronalen Netz die Messgenauigkeit des Sensors auch dann signifikant verbessert wird, wenn mit diesem bewegliche Ziele erfasst bzw. vermessen werden. Bei derartigen relativ zum Sensor bewegten Zielen ändern sich die ermittelten Abstandsdaten bzw. Positionsdaten laufend. In diesen Fällen kann mit dem neuronalen Netz eine Verarbeitung, insbesondere Filterung von Messdaten durchgeführt werden, ohne dass hierbei Schleppfehler auftreten.

Vorteilhaft werden in einem Training Netzwerkparameter des neuronalen Netzes ermittelt.

Das Training kann vor Aufnahme des Arbeitsbetriebs des Sensors oder auch während des Arbeitsbetriebs durchgeführt werden. Durch das Training werden die Netzwerkparameter fortlaufend dahingehend verbessert, dass diese an die Messdaten angepasst werden, wodurch eine erhöhte Messgenauigkeit des Sensors erzielt wird.

Insbesondere können während eines Trainings gerätespezifische Netzwerkparameter ermittelt werden.

Damit können Messungenauigkeiten aufgrund von Exemplarstreuungen des Sensors oder dessen Sensorkomponenten reduziert oder vermieden werden.

Dabei kann insbesondere das Training fortlaufend durchgeführt werden, wobei mit ermittelten Netzwerkparametern Veränderungen von Geräteeigenschaften kompensiert werden. Zudem ist es möglich, dass sich das neuronale Netz an die typischen Bewegungsprofile einer Anwendung anpasst.

Damit können insbesondere durch Alterungseffekte von Bauteilen bedingte Änderungen der Messdaten kompensiert werden.

Gemäß einer vorteilhaften Ausführungsform ist die Auswerteeinheit mit dem neuronalen Netz im Sensor integriert.

Die Auswertung von Messdaten mittels des neuronalen Netzes kann somit im Sensor selbst erfolgen, so dass dieser allein eine vollständig funktionsfähige Einheit ausbilden kann.

Gemäß einer vorteilhaften Weiterbildung wird in einer externen Rechnereinheit das neuronale Netz mittels simulierten Daten überwacht und überprüft.

In diesem Fall ist zwar auch die Auswerteeinheit mit dem neuronalen Netz im Sensor integriert. Jedoch werden Netzwerkparameter für das neuronale Netz extern in der Rechnereinheit überwacht, um so die Funktion des Sensors und der dort durchgeführten Auswertung kontrollieren und bei Bedarf korrigieren zu können. Weiterhin wird in einer externen Rechnereinheit das neuronale Netz mittels simulierten Daten überwacht und überprüft, um Informationen über das Verhalten in unterschiedlichen Situationen, insbesondere Applikationsbedingungen, zu erhalten. Die so gewonnenen Informationen können für ein weiteres Training des neuronalen Netzes genutzt werden.

Hierbei ist es vorteilhaft, wenn in einer externen Rechnereinheit Netzwerkparameter ermittelt und in das neuronale Netz in der Auswerteeinheit übertragen werden.

Gemäß einer vorteilhaften Weiterbildung der Erfindung sind mehrere neuronale Netze vorhanden, aus welchen wenigstens ein neuronales Netz für die Verarbeitung von Messdaten auswählbar ist.

Insbesondere erfolgt die Auswahl in der Auswerteeinheit oder in einer externen Rechnereinheit nach Optimierungskriterien.

Die Auswahl erfolgt demzufolge derart, dass das am besten geeignete neuronale Netz zur Auswertung der Messdaten herangezogen wird. Diese Auswahl kann in der Auswerteeinheit des Sensors selbst oder in einer externen Rechnereinheit erfolgen. Für diese Auswahl sind in der Auswerteeinheit bzw. in der externen Rechnereinheit Auswahlkriterien hinterlegt, wie z.B. Eigenschaften des generierten Ausgangssignals, wie z.B. Streuungen oder Unregelmäßigkeiten im Ausgangssignal, die ein Indikator für eine nicht optimale Auswahl des neuronalen Netzes sein können.

Generell sind die Netzwerkparameter des oder jedes neuronalen Netzes veränderbar, insbesondere durch ein fortlaufendes Training des oder der neuronalen Netze. Gleichzeitig werden diese Netzwerkparameter in der Auswerteeinheit und/oder in einer externen Auswerteeinheit dauerhaft gespeichert, so dass die Historie der Netzwerkparameter verfügbar ist.

Gemäß einer vorteilhaften Ausgestaltung ist dem neuronalen Netz eine Vorverarbeitungseinheit zugeordnet.

Dies ist insbesondere dann vorteilhaft, wenn die Messdaten in einer Vorverarbeitung auf einen bestimmten Wert, wie z.B. einen Mittelwert, bezogen werden.

Gemäß einer besonders vorteilhaften Ausführungsform ist dem neuronalen Netz wenigstens ein Filter zugeordnet, welcher zur Filterung von Messdaten ausgebildet ist.

Mit dem Filter können Beeinträchtigungen der Ausgangssignale des Sensors aufgrund von Messwertrauschens signifikant reduziert werden. Durch die Filterung der Messdaten kann dabei nicht nur das Messwertrauschen reduziert werden. Vielmehr können bei mobilen Systemen, bei welche der Sensor relativ zu einem zu erfassenden Objekt bewegt ist, auch Schleppfehler vermieden werden, was einen erheblichen Vorteil gegenüber bekannten Mittelwertfiltern bildet.

Vorteilhaft sind der oder die Filter von jeweils einem FIR-Filter, IIR-Filter, einem Zustandsfilter, insbesondere einem Kalman-Filter, oder einem weiteren neuronalen Netz gebildet.

Gemäß einer vorteilhaften Ausgestaltung sind mehrere Filter vorgesehen, die einem neuronalen Netz zugeordnet sind. Mittels des neuronalen Netzes kann für den Arbeitsbetrieb ein geeigneter Filter ausgewählt werden. Während des Arbeitsbetriebs kann mit dem neuronalen Netz auch eine veränderliche, insbesondere ereignisgesteuerte Auswahl eines neuronalen Netzes erfolgen. Insbesondere kann die Auswahl abhängig vom Bewegungszustand des zu erfassenden Objekts erfolgen, was dadurch ermittelt werden kann, wie schnell sich die mit dem Sensor erfassten Positionsdaten bzw. Abstandsdaten ändern.

Weiter vorteilhaft ist dem neuronalen Netz eine Steuerung zugeordnet, mittels derer durch Wechsel von Filtern bedingte Veränderungen von Ausgangswerten des neuronalen Netzes begrenzt werden.

Dies kann dadurch erfolgen, dass die Steuerung die Auswahl der Filter so steuert, dass nur begrenzte Filter-Veränderungen auftreten.

Generell ist es auch möglich, dass dem neuronalen Netz mehrere Filter zugeordnet sind, von denen alle oder eine Teilmenge gleichzeitig aktiviert sind, so dass die Messdaten in unterschiedlichen Filtern zeitgleich gefiltert werden.

Insbesondere sind dem neuronalen Netz mehrere Filter zugeordnet, wobei im neuronalen Netz abhängig von Messdaten Gewichtungsfaktoren für Filterausgangswerte generiert werden.

Die Erfindung wird im Folgenden anhand der Zeichnung erläutert:

Figur 1: Schematische Darstellung eines ersten Ausführungsbeispiels der erfindungsgemäßen Sensoranordnung in Form eines Positionsmaßsystems mit einem zugeordneten optischen Sensor.

Figur 2: Schematische Darstellung eines zweiten Ausführungsbeispiels eines optischen Sensors.

Figur 3: Sensoranordnung mit einem optischen Sensor gemäß Figur 2.

Figur 4: Erstes Ausführungsbeispiel einer Auswerteeinheit eines optischen Sensors mit einem neuronalen Netz.

Figur 5: Zweites Ausführungsbeispiel einer Auswerteeinheit eines optischen Sensors mit einem neuronalen Netz und einem Filter.

Figur 6: Drittes Ausführungsbeispiel einer Auswerteeinheit eines optischen Sensors mit einem neuronalen Netz.

Figur 7: Viertes Ausführungsbeispiel einer Auswerteeinheit eines optischen Sensors mit einem neuronalen Netz mit einer Vorverarbeitungseinheit.

Figur 8: Zeitabhängiger Verlauf von Positionswerten für die Sensoranordnung gemäß Figur 1.

Figur 9: Zeitabhängiges Bewegungsszenario für die Applikation gemäß Figur 8 mit Eingangsdaten des optischen Sensors, Soll-Ausgangssignalen und Ausgangssignalen, die mit der erfindungsgemäßen Auswerteeinheit gemäß Figur 7 erhalten werden, und Ausganssignale, die mit einer Mittelwertbildung erhalten werden.

Figur 10: Ausschnitt des Bewegungsszenarios gemäß Figur 9 bei Stillstand.

Figur 11: Positionswerte für das Bewegungsszenario gemäß Figur 9 bei konstanter Geschwindigkeit.

Figur 12: Fehlerwerte für das Bewegungsszenario gemäß Figur 9 bei konstanter Geschwindigkeit.

Figur 13: Darstellung eines über eine bidirektionale Datenverbindung mit einer externen Rechnereinheit verbundenen optischen Sensors der erfindungsgemäßen Sensoranordnung.

Figur 14: Erstes Ausführungsbeispiel einer Auswerteeinheit mit einem neuronalen Netz und mehreren Filtern.

Figur 15: Zweites Ausführungsbeispiel einer Auswerteeinheit mit einem neuronalen Netz und mehreren Filtern.

Figur 16: Drittes Ausführungsbeispiel einer Auswerteeinheit mit einem neuronalen Netz und mehreren Filtern.

Figur 17: Viertes Ausführungsbeispiel einer Auswerteeinheit mit einem neuronalen Netz und mehreren Filtern.

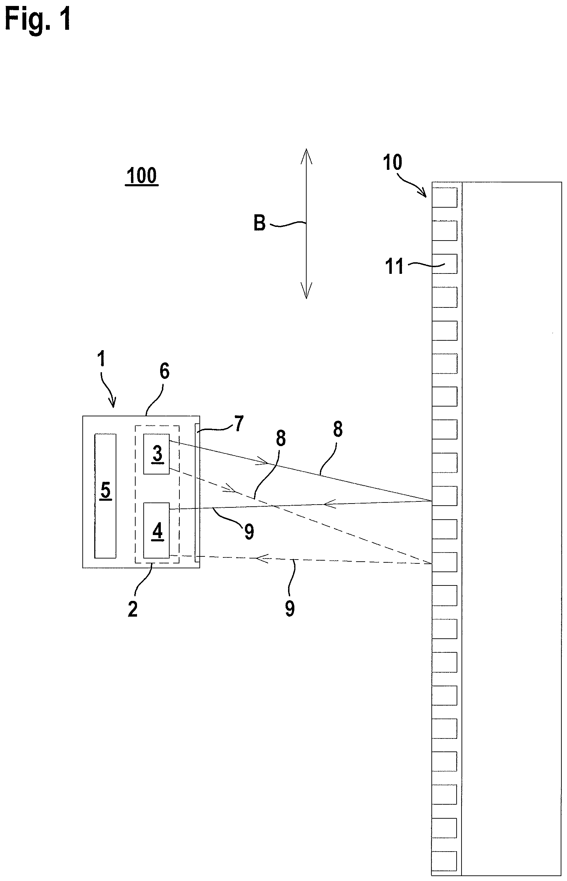

Figur 1 zeigt ein erstes Ausführungsbeispiel der erfindungsgemäßen Sensoranordnung 100 mit einem Sensor in Form eines optischen Sensors 1 und einem Positionsmaßsystem 10. Der optische Sensor 1 und/oder das Positionsmaßsystem 10 sind beweglich angeordnet, so dass diese in der mit dem Pfeil B gekennzeichneten Bewegungsrichtung gegeneinander bewegbar sind. Mit der in Figur 1 dargestellten Anordnung können relativ zueinander bewegbare Gegenstände positioniert werden. Im vorliegenden Fall ist ein nicht dargestelltes Fahrzeug gegenüber einem stationären Gegenstand in Form eines Regallagers oder dergleichen zu positionieren. Der optische Sensor 1 ist dabei an dem Fahrzeug montiert, während das Positionsmaßsystem 10 am Regallager montiert ist.

Zur Erfassung der Fahrzeugposition relativ zum stationären Gegenstand wird das Positionsmaßsystem 10 fortlaufend mit dem optischen Sensor 1 abgetastet.

Der optische Sensor 1 gemäß Figur 1 umfasst eine Sende-/Empfangseinheit 2, die als Sender 3 eine Beleuchtungseinheit und als Empfänger 4 eine Flächenkamera aufweist, die an eine gemeinsame Auswerteinheit 5 angeschlossen sind. Diese Komponenten des optischen Sensors 1 sind in einem Gehäuse 6 untergebracht, in dessen Frontwand ein lichtdurchlässiges Fenster 7 vorgesehen ist.

Die Flächenkamera ist als CCD-Kamera, CMOS-Kamera oder dergleichen ausgebildet und weist eine flächige matrixförmige Anordnung von Empfangselementen bildenden Pixeln auf. Der optische Sensor 1 ist dabei derart am Fahrzeug montiert, dass die Flächenkamera dem Positionsmaßsystem 10 auf gleicher Höhe gegenüberliegt, so dass ein Segment des Positionsmaßsystems 10 im Sichtfeld der Flächenkamera liegt. Somit treffen vom Sender 3 emittiert Sendelichtstrahlen 8 auf das Positionsmaßsystem 10 und werden als Empfangslichtstrahlen 9 zurück zum Empfänger 4 reflektiert.

In einer alternativen Ausgestaltung kann der optische Sensor 1 auch in Form eines Laserscanners ausgebildet sein.

Das Positionsmaßsystem 10 besteht aus einer Linearanordnung von äquidistant in Reihe angeordneten Marken, wobei die Marken im vorliegenden Fall als Barcodes 11 ausgebildet sind. Dabei können sowohl eindimensionale als auch zweidimensionale Barcodes 11 eingesetzt werden.

In den Marken sind als Positionsinformationen deren Absolutpositionen innerhalb des Positionsmaßsystems 10 kodiert. Durch die Erfassung der Kodierung der Marken und deren Lagen innerhalb der mit der Flächenkamera aufgenommenen Bilder kann die aktuelle Position des optischen Sensors 1 und damit des Fahrzeugs relativ zum Positionsmaßsystem 10 bestimmt werden.

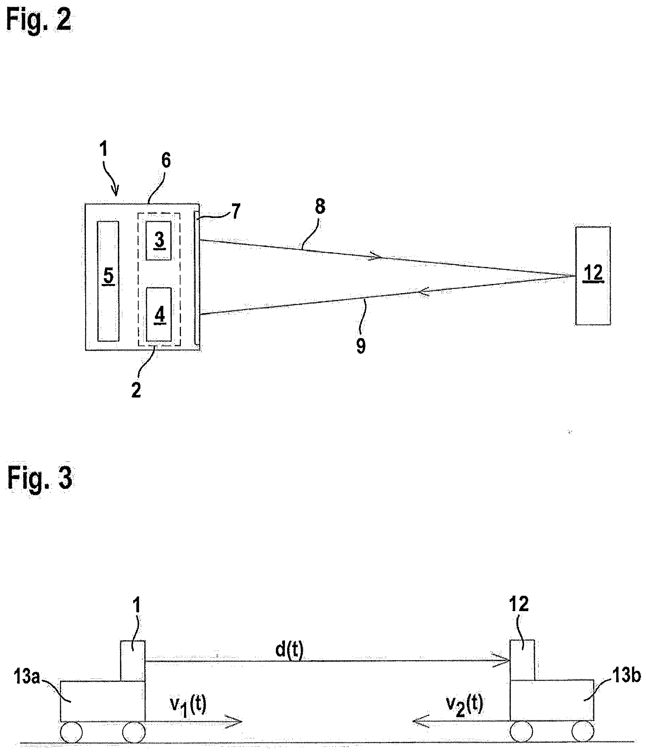

Figur 2 zeigt ein weiteres Ausführungsbeispiel eines Sensors. Dieser kann prinzipiell als Radarsensor ausgebildet sein. Im vorliegenden Fall ist der Sensor wieder ein optischer Sensor 1. Dieser optische Sensor 1 ist als Distanzsensor ausgebildet, der als Sender 3 eine Laserdiode aufweist und als Empfänger 4 eine Fotodiode aufweist. Der Sender 3 und der Empfänger 4 bilden eine Sende-/Empfangseinheit 2, die wieder einer Auswerteinheit 5 zugeordnet ist. Die Sensorkomponenten sind wieder in einem Gehäuse 6 mit einem Fenster 7 integriert. Die Auswerteinheit 5 dient zur Steuerung des Betriebes des Senders 3 und zur Auswertung der im Empfänger 4 generierten Empfangssignale.

Die Distanzmessung erfolgt nach einem Impuls-Laufzeitverfahren. Der Sender 3 emittiert hierzu Sendelichtstrahlen 8 in Form von einer Folge von Lichtimpulsen, die auf Messobjekt 12, das heißt ein zu detektierendes Messobjekt 12 treffen und von dort als Empfangslichtstrahlen 9 zum Empfänger 4 zurückreflektiert werden. In der Auswerteinheit 5 wird aus der Laufzeit der Lichtimpulse zum Objekt und zurück zum optischen Sensor 1 die Distanz des Messobjekts 12 berechnet. Die Distanzmessung kann aber auch durch andere Verfahren, wie z. B. durch eine Phasenauswertung erfolgen.

Der optische Sensor 1 und das Messobjekt 12 sind insbesondere relativ zueinander beweglich angeordnet. Figur 3 zeigt ein Beispiel, bei welchem der optische Sensor 1 auf einen erstem Wagen 13a und das Messobjekt 12 auf einem zweiten Wagen 13b angeordnet ist. Die Wagen 13a, 13b bewegen sich mit zeitabhängigen Geschwindigkeiten $v_1(t)$, $v_2(t)$ relativ zueinander, so dass die Distanz d(t) zwischen dem optischen Sensor 1 und dem Messobjekt 12 zeitabhängig ist.

Die optischen Sensoren 1 der Figuren 1 bis 3 weisen eine Auswerteeinheit 5 auf, in welcher aus Messdaten deren Sensorkomponenten Ausgangssignale generiert werden.

Bei dem optischen Sensor 1 gemäß Figur 1 werden Messdaten in Form von Positionsdaten generiert. Bei dem optischen Sensor 1 gemäß Figur 2 werden als Messdaten Abstandsdaten generiert.

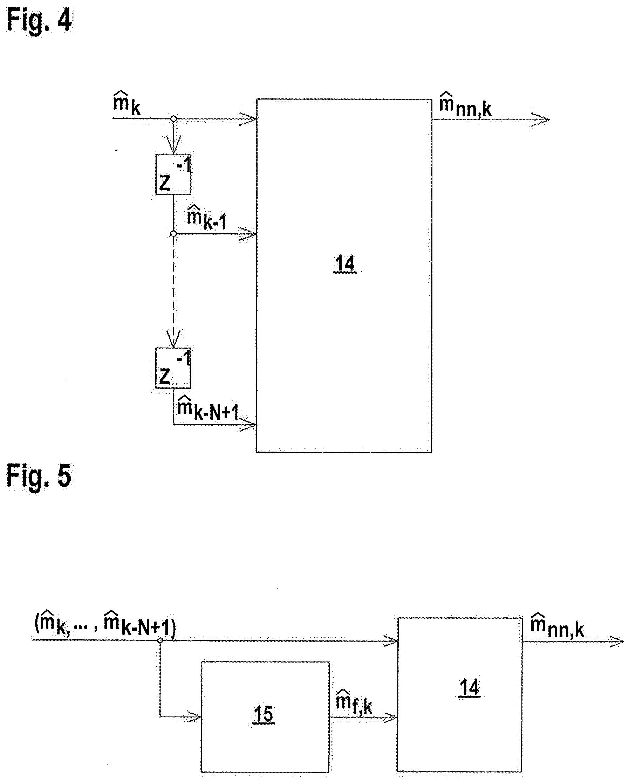

Die Auswerteeinheit 5 ist im jeweiligen optischen Sensor 1 integriert und weist erfindungsgemäß ein neuronales Netz 14 auf, wie insbesondere in den Figuren 4 bis 7 dargestellt. Im Arbeitsbetrieb des optischen Sensors 1 werden in der Auswerteeinheit 5 Messdaten $\hat{m}_k, \cdots, \hat{m}_{k-N+1}$ verarbeitet und abhängig hiervon Ausgangssignale $\hat{m}_{nn,k}$ generiert, die in Form von Positions- bzw. Distanzwerten ausgebildet sind. Der Index k bezeichnet hierbei den Zeitindex und N die Anzahl der Eingangswerte des neuronalen Netzes.

In einem Training werden die Netzwerkparameter des neuronalen Netzes 14 bestimmt. Das Training kann vor Aufnahme des Arbeitsbetriebs des optischen Sensors 1 oder auch während des Arbeitsbetriebs des optischen Sensors 1 durchgeführt werden.

Figur 4 zeigt die einfachste Ausbildung der Auswerteinheit des optischen Sensors 1 derart, dass diese nur ein neuronales Netz 14 aufweist.

Für das Training des Netzes werden Messdaten $(\hat{m}_k, \cdots, \hat{m}_{k-N+1})$ als Eingangsdaten des Netzes verwendet. Weiterhin wird ein Soll-Ausgangssignal $m_k$ des Netzes vorgegeben. Das Training ist ebenfalls notwendig. Damit werden im Training die Mess- oder Simulationsdaten $\hat{m}_k, \cdots, \hat{m}_{k-N+1}$ und $m_k$ herangezogen, um den quadratischen Fehler $(\Delta m_{nn,k})^2 = (\hat{m}_{nn,k} - m_k)^2$ zu minimieren.

Figur 5 zeigt eine Ausführungsform, bei der die Auswerteeinheit 5 ein neuronales Netz 14 mit einem vorgeordneten Filter 15 aufweist. Prinzipiell kann der Filter 15 ein Mittelwertfilter sein. Vorteilhaft ist der Filter 15 ein FIR-, IIR- oder ein Zustandsfilter wie ein Kalman-Filter. Auch kann der Filter 15 von einem weiteren neuronalen Netz 14 gebildet sein.

In diesem Fall sind die Eingangsdaten für das neuronale Netz 14 um $\hat{m}_{f,k}$ erweitert. Dabei stellt $\hat{m}_{f,k}$ den Ausgang eines Filters 15 dar, dessen Eingangsdaten durch $\hat{m}_k, \cdots, \hat{m}_{k-N+1}$ gebildet sind.

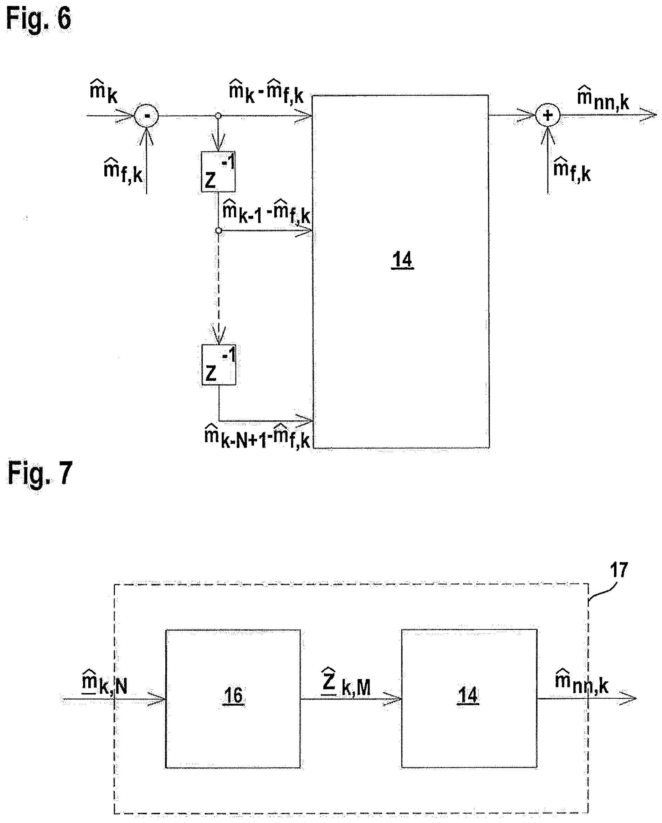

Figur 6 zeigt, eine weitere Ausführungsform einer Auswerteeinheit 5 mit einem neuronalen Netz 14. In diesem Fall wird von den Eingangsdaten ein Wert $\hat{m}_{f,k}$ abgezogen, damit der Wertebereich der Eingangsdaten des neuronalen Netzes 14 eingeschränkt werden kann. Der Wert $\hat{m}_{f,k}$ kann dabei mit Hilfe der Eingangsdaten $\hat{m}_k, \cdots, \hat{m}_{k-N+1}$ ermittelt werden, z.B. Mittelwertbildung. Damit ergeben sich die Eingangsdaten beim Training des Netzes zu $\hat{m}_k - \hat{m}_{f,k}, \cdots, \hat{m}_{k-N+1} - \hat{m}_{f,k}$. Entsprechend bestimmt sich der Soll-Ausgang des Netzes im Training zu $m_k - \hat{m}_{f,k}$.

Die Verarbeitung des Wertes $\hat{m}_{f,k}$ kann auch als Teil des neuronalen Netzes 14 betrachtet werden, so dass die Messdaten $(\hat{m}_k, \cdots, \hat{m}_{k-N+1})$ als Eingangsdaten verwendet werden, und das Soll-Ausgangssignal $\hat{m}_k$ ist. Die Verarbeitung des Werts $\hat{m}_{f,k}$ stellt eine Vorverarbeitung für das neuronalen Netz 14 dar.

Figur 7 zeigt eine Verallgemeinerung der Ausführung gemäß Figur 6.

Bei der Ausführungsform der Figur 7 ist dem neuronalen Netz 14 eine Vorverarbeitungseinheit 16 vorgeordnet. Diese bildet mit dem neuronalen Netz 14 ein erweitertes neuronales Netz 17.

Dabei werden die Messdaten $\underline{\hat{m}}_{k,N} = (\hat{m}_k, \cdots, \hat{m}_{k-N+1})$ zuerst der Vorverarbeitungseinheit 16 zugeführt. Die Ausgangsdaten der Vorverarbeitungseinheit 16 $\underline{\hat{z}}_{k,M} = (\hat{z}_k, \cdots, \hat{z}_{k-M+1})$ bestimmen sich aus den Messdaten $\underline{\hat{m}}_{k,N}$ wie folgt:

$$\underline{\hat{z}}_{k,M} = (\hat{z}_k, \cdots, \hat{z}_{k-M+1}) = (g_1(\underline{\hat{m}}_{k,N}), \cdots, g_M(\underline{\hat{m}}_{k,N}))$$

Die Funktionen $g_m(\underline{\hat{m}}_{k,N})$ ermitteln dabei die Werte $\hat{z}_{k,m}$. Für die spezielle Ausführungsform gemäß Figur 6 gilt: $M = N + 1$:

$$g_m(\underline{\hat{m}}_{k,N}) = \begin{cases} \hat{m}_{k-m+1} & \text{für } 1 \le m \le N \\ \hat{m}_{f,k} & \text{für } m = M = N + 1 \end{cases}$$

Die Funktionen $g_m(\underline{\hat{m}}_{k,N})$ können dabei durch verschiedene mathematische Funktionen realisiert sein, z. B. multiplikative Zusammenhänge der Messdaten mit $g_{N+1}(\underline{\hat{m}}_{k,N}) = \hat{m}_k \cdot \hat{m}_{k-1}$.

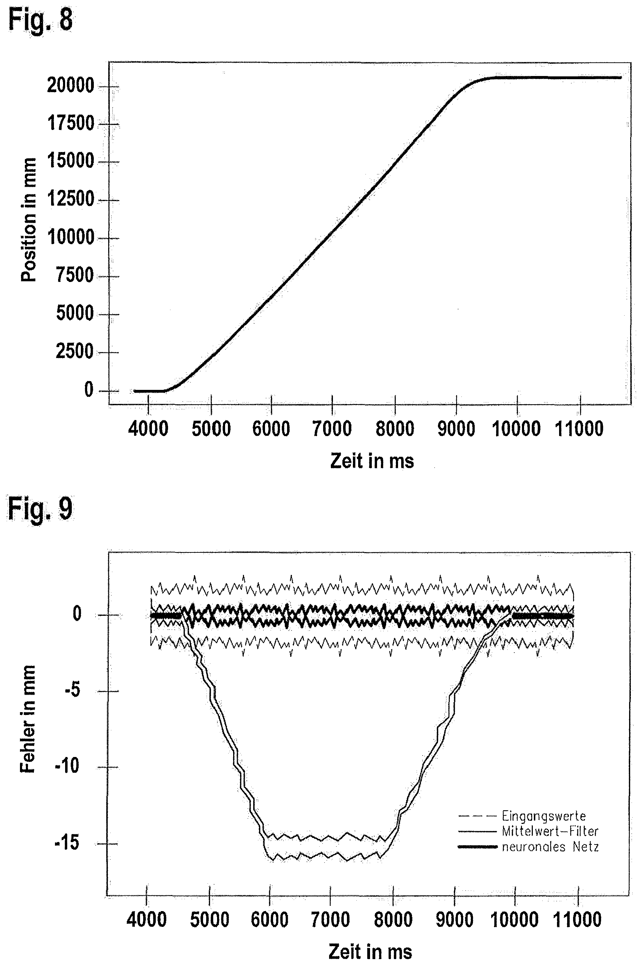

Figur 8 zeigt ein Bewegungsszenario für die Sensoranordnung gemäß Figur 1. Dabei ist in Figur 8 der zeitliche Verlauf von mit dem optischen Sensor 1 ermittelten Ausgangssignalen in Form von Positionswerten dargestellt.

Der Positionswert ist zunächst konstant. Anschließend steigt die Geschwindigkeit bis auf 5 *m/s* an. Die Geschwindigkeit bleibt dann für einen Zeitraum konstant, wodurch der Positionswert linear ansteigt. Zum Schluss sinkt die Geschwindigkeit wieder, was zum erneuten Stillstand an einer anderen Position führt.

Figur 9 zeigt für das Bewegungsszenario gemäß Figur 8 Differenzwerte bzw. Fehlerwerte. Die Fehlerwerte sind die Abweichung der Eingangswerte bzw. Messdaten zu Sollwerten. Zudem sind die mit dem neuronalen Netz 14 des erfindungsgemäßen optischen Sensors 1 ermittelten Ausgangssignale (in der Legende von Figur 9 mit neuronalem Netz 14 bezeichnet) und die mit einer Mittelwertfilterung erhaltenen Ausgangssignale (in der Legende von Figur 9 mit Mittelwertfilter bezeichnet) als Differenzwerte bzw. Fehlerwerte bezogen auf ein ideales Ausgangssignal (Sollwerte) dargestellt. Dies bedeutet, dass sowohl für Positionswerte, die mit dem neuronalen Netz 14 als auch mit dem Mittelwertfilter erhalten werden, jeweils der Fehler bezüglich des idealen Soll-Ausgangssignals aufgetragen ist. Alle Werte werden in einer Simulation berechnet, wobei normalverteiltes Rauschen der Messdaten angesetzt wurde.

Wie aus Figur 9 erkennbar, werden mit dem neuronalen Netz 14 Ausgangssignale erhalten, für die eine effiziente Rauschunterdrückung erhalten wird. Zudem trifft in diesen Ausgangssignalen kein Schleppfehler auf. Demgegenüber werden mit dem Mittelwertfilter (hier N = 8) Ausgangssignale erhalten, für die zwar eine Rauschunterdrückung erhalten wird, jedoch liegt für diese ein Schleppfehler vor, der sich in stark negativen Werten des Fehlers für das Ausgangssignal widerspiegelt.

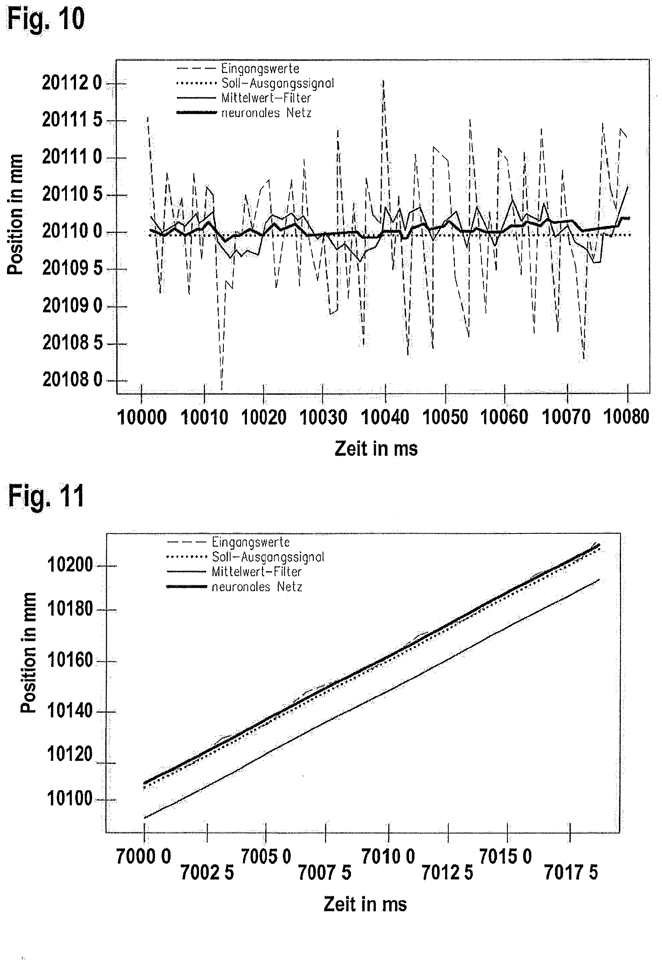

In den Figuren 10 und 11 sind neben den Eingangswerten die Positionswerte, d.h. Ausgangssignale, die mit dem neuronalen Netz 14 und mit dem Mittelwertfilter erhalten werden, aufgetragen. Zudem ist das ideale Soll-Ausgangssignal aufgetragen.

Figur 10 zeigt einen Ausschnitt der Positionswerte im Stillstand. Hierbei ist zu erkennen, dass das neuronale Netz 14 eine bessere Rauschunterdrückung durchführt als der Mittelwertfilter. Experimente zeigen, dass das neuronale Netz 14 im Stillstand sogar eine bessere Rauschunterdrückung durchführt als ein Mittelwertfilter mit N = 16.

Ein Ausschnitt aus der Bewegung mit 5 m/s ist in Figur 11 zu erkennen, wobei der starke Schleppfehler des Mittelwertfilters deutlich wird. Ein Mittelwertfilter mit größerem $N$ würde einen noch größeren Schleppfehler erzeugen. Ein kleineres N resultiert wiederum in eine noch schlechtere Rauschunterdrückung beim Mittelwertfilter.

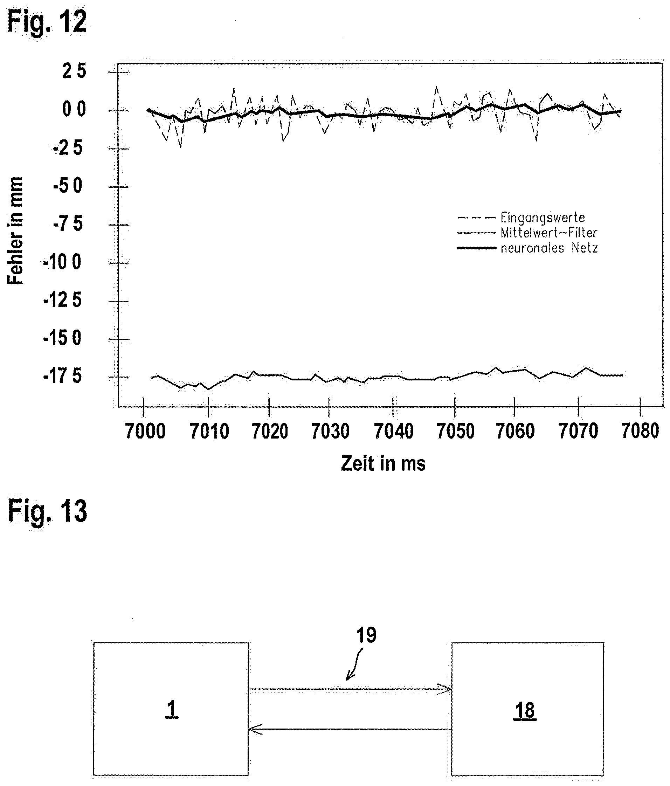

In Figur 12 sind analog zu Figur 9 wieder die Fehler der mit dem neuronalen Netz 14 bzw. Mittelwertfilter erhaltenen Positionswerte, d.h. Ausgangssignale aufgetragen. Zudem sind wieder die Eingangswerte dargestellt.

Dabei zeigt Figur 12 einen Ausschnitt des Bewegungssensors bei konstanter Geschwindigkeit. Hier ist deutlich zu erkennen, dass die mit dem neuronalen Netz 14 gewonnen Ausgangssignale keinen Schleppfehler aufweisen, wohl aber die mit dem Mittelwertfilter erhaltenen Ausgangssignale, die bezüglich der Eingangswerte deutlich zu negativen Werten verschoben sind.

Figur 13 zeigt schematisch den optischen Sensor 1 der erfindungsgemäßen Sensoranordnung und eine zugeordnete externe Rechnereinheit 18. Der optische Sensor 1 ist über eine bidirektionale Datenverbindung 19 mit der externen Rechnereinheit 18 verbunden. Die externe Rechnereinheit 18 kann ein PC, ein Edge-Computer oder ein Cloudrechner sein. Die Datenverbindung 19 kann von einer Funkstrecke gebildet sein.

Durch Veränderungen von Geräteeigenschaften kann sich z. B. das Rauschen auf den Messdaten erhöhen. Ermittelt man während des Betriebes des optischen Sensors 1 die Varianz des Rauschens, so kann der optische Sensor 1 auf diese Veränderungen reagieren. Durch Nachtrainieren des neuronalen Netzes 14 kann dieses an die aktuellen Messbedingungen angepasst werden. Das Nachtrainieren kann auch in der externen Rechnereinheit 18 erfolgen. Der optische Sensor 1 sendet hierzu die aktuelle Messsituation, z.B. die Varianz des Rauschens, an die externe Rechnereinheit 18. Die externe Rechnereinheit 18 bestimmt daraufhin angepasste Netzparameter und schickt diese Informationen an den optischen Sensor 1. Der optische Sensor 1 kann sich anschließend mit den gesendeten Netzparametern an die aktuellen Messbedingungen adaptieren.

Generell kann die Ausführungsform gemäß Figur 13 dahingehend erweitert sein, dass die Auswerteinheit des optischen Sensors 1 mehrere neuronale Netze 14 aufweist, die mit der externen Rechnereinheit 18 verbunden sind. Dann kann mittels der externen Rechnereinheit 18 abhängig von den Messbedingungen des optischen Sensors 1 das geeignete neuronale Netz 14 ausgewählt werden.

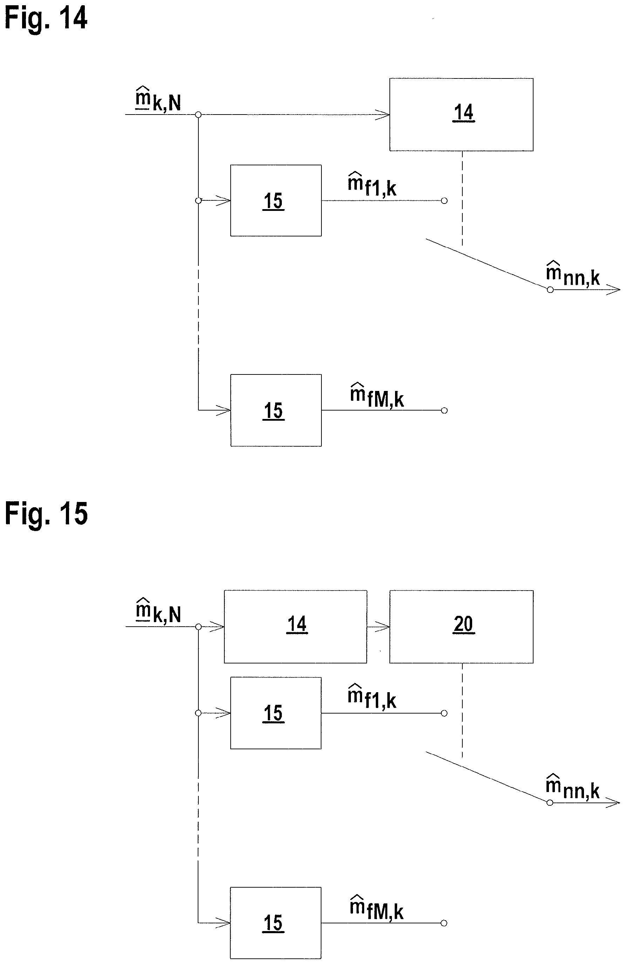

Die Figuren 14 bis 17 zeigen Ausführungsbeispiele einer Auswerteeinheit 5 des optischen Sensors 1 mit einem neuronalen Netz 14 und mehreren Filtern 15. In den Figuren 14 bis 17 sind zwei Filter 15 dargestellt, wobei natürlich auch eine andere Anzahl von Filtern 15 möglich ist.

Bei der Ausführungsform gemäß Figur 14 werden die Messdaten $\underline{\hat{m}}_{k,N} = (\hat{m}_k, \cdots, \hat{m}_{k-N+1})$ verschiedenen Filtern 15 zugeführt, wobei jeweils ein Filter 15 für ein Bewegungsszenario z. B. Stillstand, langsame oder schnelle Bewegung, optimiert ist. Das neuronale Netz verarbeitet die Messdaten $\underline{\hat{m}}_{k,N}$ und wählt anhand dieser Messdaten einen Filter 15 aus, welches aktuell das beste Ergebnis liefert. Der Ausgang des ausgewählten Filters 15 ergibt den Messwert $\hat{m}_{\mathrm{nn},k}$. Die Filter 15 können durch FIR-, IIR-, Zustandsfilter (Kalman-Filter) oder neuronale Netze realisiert sein.

Um zu verhindern, dass der Ausgangswert $\hat{m}_{\mathrm{nn},k}$ durch eine Veränderung des ausgewählten Filters 15 (Auswahl Filter 15 "Stillstand" zu Auswahl Filter 15 "schnelle Bewegung") springt, kann der Ausgang des neuronalen Netzes 14 einer Steuerung 20 zugeführt werden, welche für geglättete Ausganswerte sorgt, indem nur eine gewisse Filter-Veränderung möglich ist. Figur 15 zeigt die entsprechende Anordnung.

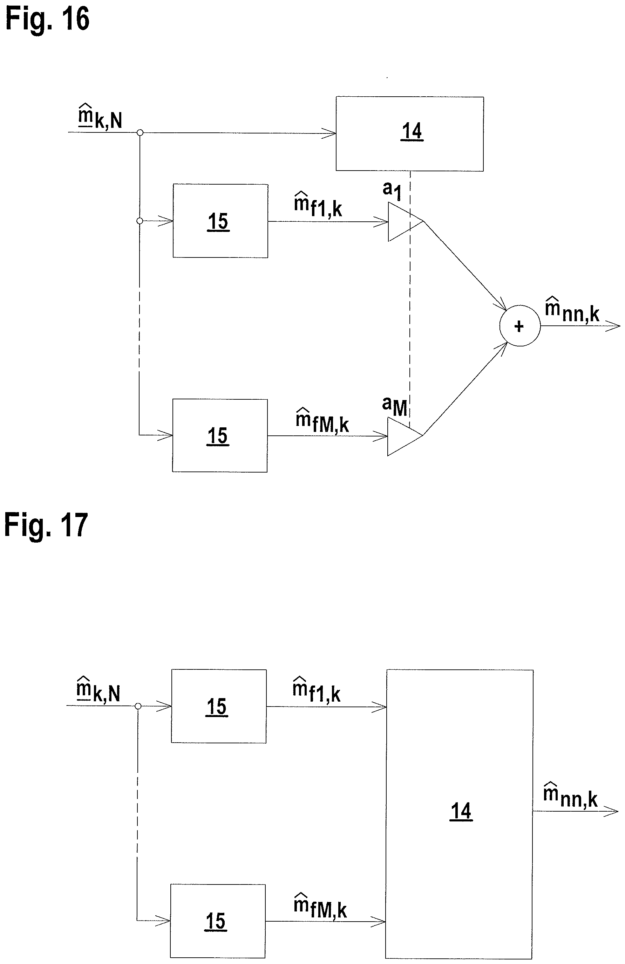

Eine weitere Ausführungsform mit einer Mehrfachanordnung von Filtern 15, ist in Figur 16 dargestellt. Dabei ermittelt das neuronale Netz 14 in Abhängigkeit der Messdaten $\underline{\hat{m}}_{k,N}$ Gewichtungsfaktoren $a_m$, mit denen die Filterausgangswerte gewichtet werden, um geglättete Ausgangswerte zu erhalten.

Die Messwerte $\hat{m}_{\mathrm{nn},k}$ bestimmen sich zu:

$$\hat{m}_{\mathrm{nn},k} = \sum_{m=1}^{M} a_m \cdot \hat{m}_{\mathrm{f}m,k}$$

Vorzugsweise erfüllen die Gewichtungsfaktoren $a_m$ folgende Bedingungen (gewichteter Mittelwert):

$$0 \leq a_m \leq 1$$

und

$$\sum_{m=1}^{M} a_m = 1$$

Die Gewichtungsfaktoren verändern sich in Abhängigkeit der Messdaten $\underline{\hat{m}}_{k,N}$.

Figur 17 zeigt eine weitere Ausführungsform einer Auswerteeinheit 5 mit einem neuronalen Netz 14 und mehreren Filtern 15. Dabei werden die Ausgangswerte $\hat{m}_{\mathrm{f}m,k}$ der Filter 15 einem neuronalem Netz 14 übergeben, welches den Messwert $\hat{m}_{\mathrm{nn},k}$ ermittelt.

Bezugszeichenliste

(1)        Optischer Sensor
(2)        Sende-/Empfangseinheit

| (3) | Sender |
| (4) | Empfänger |
| (5) | Auswerteeinheit |
| (6) | Gehäuse |
| (7) | Fenster |
| (8) | Sendelichtstrahlen |
| (9) | Empfangslichtstrahlen |
| (10) | Positionsmaßsystem |
| (11) | Barcode |
| (12) | Messobjekt |
| (13a, b) | Wagen |
| (14) | neuronales Netz |
| (15) | Filter |
| (16) | Vorverarbeitungseinheit |
| (17) | erweitertes neuronales Netz |
| (18) | Rechnereinheit |
| (19) | Datenverbindung |
| (20) | Steuerung |

**Patentansprüche**

1. Sensoranordnung mit einem Sensor, der Sensorkomponenten aufweist, welche Messdaten in Form von Abstandsdaten oder Positionsdaten generieren, **dadurch gekennzeichnet, dass** eine Auswerteeinheit (5) mit wenigstens einem neuronalen Netz (14) vorgesehen ist, mittels dessen Messwertfehler von aus den Messdaten abgeleiteten Ausgangssignal reduziert werden.

2. Sensoranordnung nach Anspruch 1, **dadurch gekennzeichnet, dass** der Sensor ein optischer Sensor (1) ist.

3. Sensoranordnung nach einem der Ansprüche 1 oder 2, **dadurch gekennzeichnet, dass** der Sensor ein Distanzsensor ist.

4. Sensoranordnung nach einem der Ansprüche 1 oder 2, **dadurch gekennzeichnet, dass** diese ein Positionsmaßsystem (10) aufweist.

5. Sensoranordnung nach einem der Ansprüche 1 bis 4, **dadurch gekennzeichnet, dass** in einem Training Netzwerkparameter des neuronalen Netzes (14) ermittelt werden.

6. Sensoranordnung nach Anspruch 5, **dadurch gekennzeichnet, dass** während eines Trainings gerätespezifische oder an die Bewegungsprofile angepasste Netzwerkparameter ermittelt werden.

7. Sensoranordnung nach Anspruch 5, **dadurch gekennzeichnet, dass** das Training fortlaufend durchgeführt wird, wobei mit ermittelten Netzwerkparametern Veränderungen von Geräteeigenschaften kompensiert werden.

8. Sensoranordnung nach einem der Ansprüche 1 bis 7, **dadurch gekennzeichnet, dass** die Auswerteeinheit (5) mit dem neuronalen Netz (14) im Sensor integriert ist.

9. Sensoranordnung nach Anspruch 8, **dadurch gekennzeichnet, dass** in einer externen Rechnereinheit (18) die neuronalen Netze mittels simulierten Daten überwacht und überprüft werden.

10. Sensoranordnung nach einem der Ansprüche 1 bis 8, **dadurch gekennzeichnet, dass** in einer externen Rechnereinheit (18) Netzwerkparameter ermittelt und in das neuronale Netz (14) in der Auswerteeinheit (5) übertragen werden.

11. Sensoranordnung nach einem der Ansprüche 1 bis 10, **dadurch gekennzeichnet, dass** mehrere neuronalen Netze (14) vorhanden sind, aus welchen wenigstens ein neuronales Netz (14) für die Verarbeitung von Messdaten auswählbar ist.

**12.** Sensoranordnung nach Anspruch 11, **dadurch gekennzeichnet, dass** die Auswahl in der Auswerteeinheit (5) oder in einer externen Rechnereinheit (18) nach Optimierungskriterien erfolgt.

**13.** Sensoranordnung nach einem der Ansprüche 1 bis 12, **dadurch gekennzeichnet, dass** die Netzwerkparameter veränderbar sind und dauerhaft gespeichert sind.

**14.** Sensoranordnung nach einem der Ansprüche 1 bis 13, **dadurch gekennzeichnet, dass** dem neuronalen Netz (14) eine Vorverarbeitungseinheit (16) zugeordnet ist.

**15.** Sensoranordnung nach einem der Ansprüche 1 bis 14, **dadurch gekennzeichnet, dass** dem neuronalen Netz (14) wenigstens ein Filter (15) zugeordnet ist, welcher zur Filterung von Messdaten ausgebildet ist.

**16.** Sensoranordnung nach Anspruch 15, **dadurch gekennzeichnet, dass** mittels des neuronalen Netzes (14) eine zeitabhängige und/oder ereignisgesteuerte Auswahl eines Filters (15) durchführbar ist.

**17.** Sensoranordnung nach Anspruch 16, **dadurch gekennzeichnet, dass** dem neuronalen Netz (14) eine Steuerung (20) zugeordnet ist, mittels derer durch Wechsel von Filtern (15) bedingte Veränderungen von Ausgangswerten des neuronalen Netzes (14) begrenzt werden.

**18.** Sensoranordnung nach einem der Ansprüche 1 bis 14, **dadurch gekennzeichnet, dass** dem neuronalen Netz (14) mehrere Filter (15) zugeordnet sind, wobei im neuronalen Netz (14) abhängig von Messdaten Gewichtungsfaktoren für Filterausgangswerte generiert werden.

**19.** Sensoranordnung nach einem der Ansprüche 15 bis 19, **dadurch gekennzeichnet, dass** der oder die Filter (15) von jeweils einem FIR-Filter, IIR-Filter, einem Zustandsfilter, insbesondere einem Kalman-Filter, oder einem weiteren neuronalen Netz gebildet sind.

**20.** Verfahren zum Betrieb einer Sensoranordnung mit einem Sensor, der Sensorkomponenten aufweist, welche Messdaten in Form von Abstandsdaten oder Positionsdaten generieren, **dadurch gekennzeichnet, dass** eine Auswerteeinheit (5) mit wenigstens einem neuronalen Netz (14) vorgesehen ist, mittels dessen Messwertfehler von aus den Messdaten abgeleiteten Ausgangssignalen reduziert werden.

# Fig. 1

Fig. 2

Fig. 3

## Fig. 4

$\widehat{m}_k$

$Z^{-1}$

$\widehat{m}_{k-1}$

$\underline{14}$

$\widehat{m}_{nn,k}$

$Z^{-1}$

$\widehat{m}_{k-N+1}$

## Fig. 5

$(\widehat{m}_k, \dots, \widehat{m}_{k-N+1})$

$\underline{15}$

$\widehat{m}_{f,k}$

$\underline{14}$

$\widehat{m}_{nn,k}$

## Fig. 6

$\widehat{m}_k$

$\widehat{m}_k$ - $\widehat{m}_{f,k}$

$\widehat{m}_{nn,k}$

−

$\widehat{m}_{f,k}$

$\widehat{m}_{f,k}$

$Z^{-1}$

$\widehat{m}_{k-1}$ - $\widehat{m}_{f,k}$

+

$\underline{14}$

$Z^{-1}$

$\widehat{m}_{k-N+1}$ - $\widehat{m}_{f,k}$

## Fig. 7

17

$\underline{\widehat{m}}_{k,N}$

$\underline{16}$

$\underline{\widehat{Z}}_{k,M}$

$\underline{14}$

$\widehat{m}_{nn,k}$

## Fig. 8

## Fig. 9

## Fig. 10

## Fig. 11

## Fig. 12

## Fig. 13

# Fig. 14

$$\underline{\widehat{m}}_{k,N}$$

14

15    $\widehat{m}_{f1,k}$

$\widehat{m}_{nn,k}$

15    $\widehat{m}_{fM,k}$

# Fig. 15

$$\underline{\widehat{m}}_{k,N}$$

14    20

15    $\widehat{m}_{f1,k}$

$\widehat{m}_{nn,k}$

15    $\widehat{m}_{fM,k}$

# Fig. 16

$\widehat{\underline{m}}_{k,N}$

$\underline{14}$

$\widehat{m}_{f1,k}$    $a_1$

$\underline{15}$

$\widehat{m}_{fM,k}$    $a_M$

$\underline{15}$

$+$   $\widehat{m}_{nn,k}$

# Fig. 17

$\widehat{\underline{m}}_{k,N}$    $\underline{15}$    $\widehat{m}_{f1,k}$

$\underline{14}$    $\widehat{m}_{nn,k}$

$\underline{15}$    $\widehat{m}_{fM,k}$

Europäisches Patentamt
European Patent Office
Office européen des brevets

**EUROPÄISCHER RECHERCHENBERICHT**

Nummer der Anmeldung

EP 22 17 4508

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/018590 A1 (GRAU OLIVER [DE]) 21. Januar 2021 (2021-01-21) | 1-7, 9-14,16, 17,20 | INV. G01S7/41 G01S7/497 |
| Y | * Absatz [0037] * | 8 | G06N3/08 |
| A | * Absatz [0055] * * Absätze [0064], [0065], [0069], [0070] * * Absätze [0141], [0142] * ----- | 18 | G01S7/52 |
| Y | CN 113 567 961 A (SHANGHAI HESAI TECH CO LTD) 29. Oktober 2021 (2021-10-29) | 8 | |
| A | * Absatz [0325] * ----- | 18 | |
| X | VAIDEHI V ET AL: "NEURAL NETWORK AIDED KALMAN FILTERING FOR MULTITARGET TRACKING APPLICATIONS", RECORD OF THE 1999 IEEE RADAR CONFERENCE. WALTHAM, MA, APRIL 20 - 22, 1999; [IEEE RADAR CONFERENCE], NEW YORK, NY : IEEE, US, 20. April 1999 (1999-04-20), Seiten 160-165, XP000895738, ISBN: 978-0-7803-4978-0 | 1,14,15, 19,20 | RECHERCHIERTE SACHGEBIETE (IPC) G01S G06N |
| A | * Seite 160, Absatz 2 - Seite 161, Absatz 3 * ----- | 18 | |

Der vorliegende Recherchenbericht wurde für alle Patentansprüche erstellt

| Recherchenort | Abschlußdatum der Recherche | Prüfer |
|---|---|---|
| München | 27. Oktober 2022 | Cortona, Anna |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

**EP 22 17 4508**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**27-10-2022**

| Im Recherchenbericht angeführtes Patentdokument | Datum der Veröffentlichung | Mitglied(er) der Patentfamilie | Datum der Veröffentlichung |
|---|---|---|---|
| US 2021018590 A1 | 21-01-2021 | CN 114330473 A | 12-04-2022 |
| | | EP 3974869 A1 | 30-03-2022 |
| | | US 2021018590 A1 | 21-01-2021 |
| CN 113567961 A | 29-10-2021 | KEINE | |

Für nähere Einzelheiten zu diesem Anhang : siehe Amtsblatt des Europäischen Patentamts, Nr.12/82

EPO FORM P0461